# EUROPEAN PATENT APPLICATION

(11) **EP 0 887 172 A1**
(43) Date of publication of application: **30.12.1998**
(21) Application number: 98304296.1
(22) Date of filing: 01.06.1998
(51) Int. Cl.: B29C 47/70, B29C 47/36

(54) **Plastics extrusion**

(30) Priority: 23.06.1997 GB 9713247
(71) Applicant: PIRELLI GENERAL plc, London W1X 6BU (GB)
(72) Inventor: Shackleton, Nigel, Cwmbran, Gwent, NP44 5LJ (GB)
(74) Representative: Abbie, Andrew Kenneth

(57) **Abstract**

An extruder for extruding an elongate plastics member 32, comprises a rotatable screw 12 within a barrel 14 for extruding plastics material through an extrusion head 20 of the extruder provided with an extrusion die 22. A breaker plate 18 (50, 80) is positioned upstream of the die 22 and causes plastics material which is radially inwardly of plastics material adjacent the barrel 14 upstream of the plate 18 to be radially outwardly thereof downstream of the plate 18 such that an outer surface layer of the elongate plastics member 32 extruded by the extruder comprises the material which was radially inwardly of the material adjacent the barrel upstream of the plate 18. This arrangement reduces the time taken for a colour change.

## Description

This invention relates to the extrusion of an elongate plastics member, such as a covering for an electric wire or optical fibre, in which case the extruded elongate plastics member is tubular. However, it is to be understood that the invention is also applicable to the extrusion of elongate plastics members of solid cross-section.

Typically, an extruder for extruding an elongate plastics member comprises a rotatable screw within a barrel for extruding plastics material through an extrusion head of the extruder provided with extrusion die means. Also typically electric wires and optical fibres are provided with extruded plastics coverings which are coloured for identification purposes. Accordingly, from time to time there is a need to change the colour of the covering being extruded by the extruder. Such a colour change is carried out by feeding material of the new colour into the extruder to purge the material of the old colour from the extruder and monitoring the colour of the covering being extruded until it is the colour required. The time taken for this operation is non-productive and the material used is wasted.

An object of the present invention is to reduce the time and material used for a colour change.

The invention is based on the discovery that the old colour is still present at the outer surface of the extruded covering when the material radially inwardly thereof is of the new colour. It is believed that this differential purging may occur because the plastics material in the extruder tends to stick more to the barrel wall than other parts of the extruder because it is at a higher temperature.

The invention provides a method of extruding an elongate plastics member with an extruder provided with an extrusion die, in which method upstream of the die, plastics material which is radially inwardly of an outer layer of plastics material which would otherwise provide the surface layer of the extruded member is directed radially outwardly so that it forms the surface layer of the extruded member and/or plastics material from the outer layer is directed radially inwardly.

The invention also provides a method of extruding an elongate plastics member with an extruder comprising a rotatable screw within a barrel in which method an outer surface layer of the elongate member is formed from plastics material which was radially inwardly of plastics material adjacent the barrel.

The invention also provides an extruder for extruding an elongate plastics member provided with extrusion die means comprising an extrusion die and upstream of said die a device which is adapted to cause (i) plastics material which is radially inwardly of an outer layer of plastics material which would otherwise provide the surface layer of the extruded member to be radially outwardly directed to form the surface layer of the extruded member and/or (ii) plastics material from the outer layer to be radially inwardly directed.

The invention also provides an extruder for extruding an elongate plastics member, comprising a rotatable screw within a barrel for extruding plastics material through an extrusion head of the extruder provided with extrusion die means, wherein a device positioned upstream of the die means is adapted to cause plastics material which is radially inwardly of plastics material adjacent the barrel upstream of the device to be radially outwardly thereof downstream of the device such that an outer surface layer of the elongate plastics member extruded by the extruder comprises the material which was radially inwardly of the material adjacent the barrel upstream of the device.

The invention also extends to an elongate plastics member, or an article incorporating such a member, when said member has been extruded by a method as defined in the last but two or last but three paragraph or with an extruder as defined in the last or last but one paragraph.

The above-mentioned device preferably comprises a breaker plate having through passages for the passage of plastics material therethrough. It is conventional to provide a breaker plate upstream of the die means in a plastics extruder to act as a seal between the barrel and die means but the conventional breaker plates are provided with through passages which are parallel to each other and do not act to direct the plastics material passing therethrough either radially inwardly or outwardly. JP-A-54-130667 discloses a breaker assembly comprising a first plate having non-parallel through passages followed by a second plate having parallel through passages. The first plate is said to be velocity unifying.

In a first embodiment of the present invention, the through passages of the breaker plate comprise at least one circumferentially spaced apart array of first through passages having inlets at the upstream side of the breaker plate which are radially outwardly of outlets thereto at the downstream side of the breaker plate and at least one circumferentially spaced apart array of second through passages having inlets at the upstream side of the breaker plate which are radially inwardly of the inlets of said first through passages and outlets at the downstream side of the breaker plate which are radially outwardly of the outlets of said first through passages.

In a second embodiment of the invention the through passages of the breaker plate comprise a circumferentially spaced apart array of through passages extending through said breaker plate, each through passage having a double flight screw non-rotatably fixed therein to define two paths for plastics material passing through the through passage from the upstream side of the plate to the downstream side of the plate, each path having an entrance at the upstream side of the plate and an exit at the downstream side thereof, the entrance of one of said paths being radially outwardly of the entrance of the other path and the exit of said one path being radially inwardly of the exit of said other path.

The invention also includes a breaker plate having through passages as defined in either of the last two paragraphs.

In the second embodiment, preferably each flight of said double flight screw extends through substantially 180° between the upstream and downstream sides of the plate.

The spacing of the flights of said double flight screw may be such that one of said paths has a larger cross-sectional area than the other of said paths. In this case, preferably the path having the larger cross-sectional area is the path having the radially outer of the exits of the paths.

The double flight screw may be removably mounted in the through passage. In this case, the screw may be insertable in the through passage from the upstream end thereof and locate against abutment means for preventing movement downstream thereof.

The through passages of the second embodiment may be substantially parallel or the upstream ends of the passages may be radially inwardly of the downstream ends thereof.

In both embodiments, said through passages of the breaker plate preferably include substantially parallel through passages radially inwardly of the previously recited through passages.

In order that the invention may be well understood, the above-mentioned embodiments thereof, which are given by way of example only will now be described with reference to the accompanying drawings, in which:
Figure 1 schematically illustrates part of an extruder for extruding a plastics covering over a wire;
Figure 2 is a view of the upstream side of a breaker plate of the extruder;
Figure 3 is a cross-sectional view of the same breaker plate taken along the line III-III in Figure 2;
Figure 4 is a view of the upstream side of an alternative breaker plate;
Figure 5 is a cross sectional view of the breaker plate shown in Figure 4 taken along the line V-V in that figure; and
Figure 6 is a side view of an insert of the breaker plate shown in Figures 4 and 5.

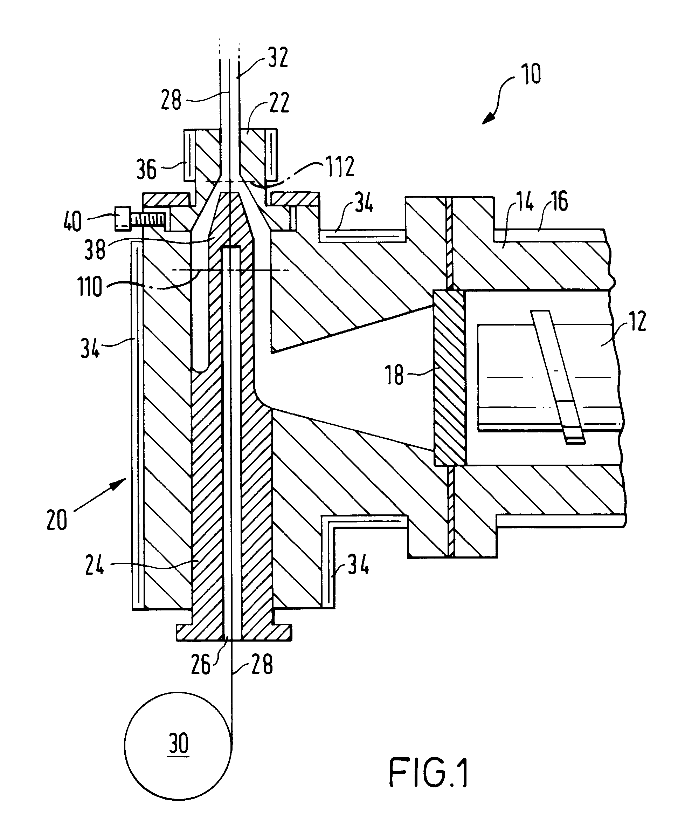

Referring now to Figure 1, the extruder 10 which is part shown therein comprises a rotatable screw 12 mounted within a barrel 14 which is heated by a barrel heater 16. Pellets of a thermoplastics material are fed into the extruder via a hopper (not shown) and this material is fed along the barrel on rotation of the screw and through through passages (not shown in Figure 1) in a breaker plate 18 into an extrusion head 20 which is provided with a die 22 through which the thermoplastic material, which has been softened during its passage along the barrel, is extruded as an elongate member.

The illustrated extruder is configured to extrude a covering in the form of a tubular elongate member over an electric wire or an optical fibre and the extrusion head 20 takes the form of a so-called 'cross-head' and diverts the plastics material passing through the breaker plate 18 substantially 90° so that it flows about a mandrel 24, which is positioned in the cross-head 20, towards the die 22.

The mandrel 24 has a passage 26 through which an electric wire or optical fibre 28 travels towards the die 22 from a supply thereof schematically illustrated at 30. The wire or fibre 28 is pulled through the passage 26 and die 22 by a haul-off device (not shown) located downstream of the die 22 and the plastics material is applied to the wire or fibre 28 as a covering 32 as the wire or fibre emerges from the die 22.

Heaters 34 and 36 are provided on the cross-head 20 and die 22. The relative positions of the die 22 and a frusto conical nose 38 of the mandrel are adjustable for adjusting the thickness of the covering 32 and its concentricity. Thickness is adjusted by altering the axial spacing of the die 22 and mandrel nose 38 and concentricity is adjusted by means of centring screws 40 (only one shown) which enable the radial position of the die 22 relative to the nose axis to be altered.

As so far described the extruder 10 is conventional. The two illustrated embodiments of the present invention, differ from conventional extruders by the provision of a device positioned upstream of the die 22 which causes plastics material which is radially inwardly of plastics material adjacent the barrel 14 upstream of the device to be radially outwardly thereof downstream of the device such that the outer surface of the covering 32 comprises the material which was radially inwardly of the material adjacent the barrel upstream of the device. As explained above, the provision of such a device reduces the time and material taken for a colour change.

In the two illustrated embodiments, the above-mentioned device takes the form of a modified breaker plate 18. In conventional extruders the breaker plate has parallel through passages which do not act to direct the plastics material passing therethrough either radially inwardly or radially outwardly.

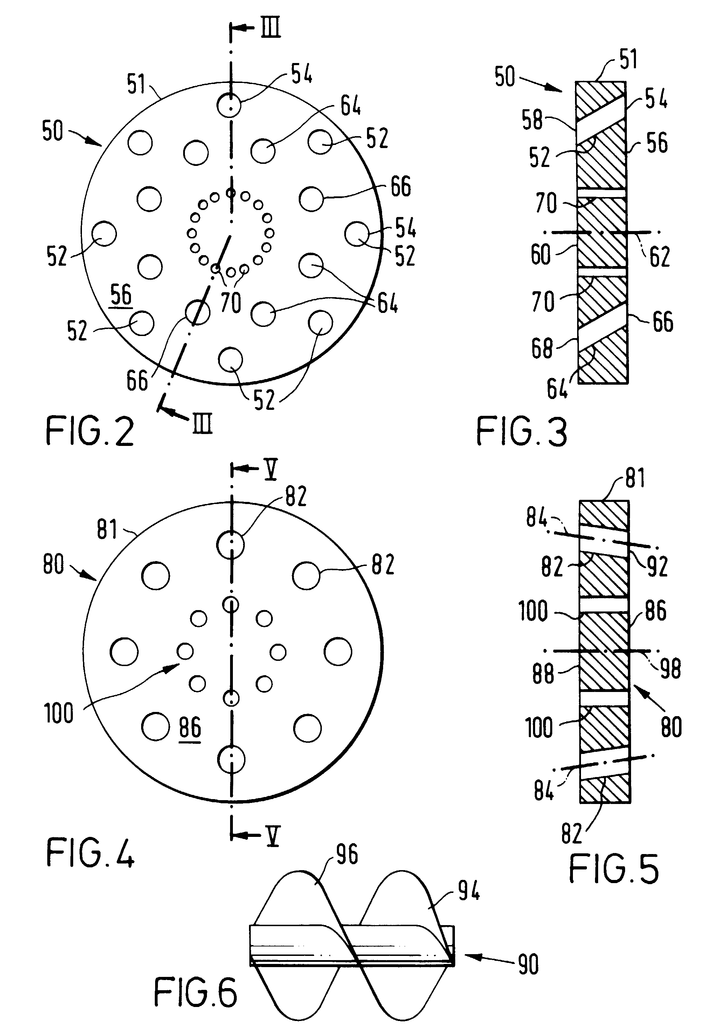

In the first illustrated embodiment of the invention, the breaker plate, which is shown in Figures 2 and 3 and designated 50 therein, comprises adjacent its outer circumference 51 a circumferentially spaced apart array of first through passages 52 (Figure 2) having inlets 54 at the upstream side 56 of the breaker plate which are radially outwardly of outlets 58 therefrom at the downstream side 60 of the breaker plate. As shown there are eight such first through passages 52. However, it is to be understood that there may be more or less than eight first passages 52. Also although only one array of circumferentially spaced apart first through passages 52 are illustrated there may be two or more such arrays at different radii. It will be appreciated that the through passages 52 are inclined to the central axis 62 of the breaker plate 50 so as to direct plastics material adjacent the barrel 14 on the upstream side 56 of the breaker plate radially inwardly.

The breaker plate 50 also comprises a circumferentially spaced apart array of second through passages 64. Again eight such second through passages are illustrated but more or less than eight may be provided. Also there could be more than one circumferentially spaced apart array of second through passages 64. However, in all cases the second through passages 64 have inlets 66 at the upstream side 56 of the breaker plate which are radially inwardly of the inlets 54 of the first through passages 52 and outlets 68 at the downstream side 60 of the breaker plate which are radially outwardly of the outlets 58 of the first through passages 52.

It will be appreciated that the second through passages 64 are inclined to the central axis 62 of the breaker plate so as to direct plastics material which is radially inwardly of the plastics material adjacent the barrel on the upstream side 56 of the plate 50 (which material is directed through the first passages 52) radially outwardly, so that the material radially inwardly of the material adjacent the barrel upstream of the plate 50 forms the outer surface layer of the covering 32.

The breaker plate 50 also comprises further through passages 70 radially inwardly of passages 52 and 64 and extending substantially parallel to each other and the axis 62. Thus material passing through passages 70 proceeds with substantially no radial deviation.

In the second illustrated embodiment of the invention, the breaker plate which is shown in Figures 4 and 5 and designated 80 therein, comprises adjacent its outer circumference 81 a circumferentially spaced apart array of through passages 82. Each through passage 82 has a double flight screw represented by a centre line 84 in Figure 5 non-rotatably fixed therein for defining two paths for plastics material passing through the passage 82 from the upstream side 86 of the plate 80 to the downstream side 88 thereof.

The double flight screws are provided by respective inserts 90 shown in Figure 6 which are removably mounted in the passages 82. An insert 90 is inserted in each passage from the upstream end 92 thereof and locates against an abutment (not shown) which prevents movement downstream of the plate during extrusion.

Each insert 90 together with the passage 82 in which it is inserted defines two paths for plastics material passing through the passage 82 from the upstream side 86 of the plate to the downstream side 88 thereof. Each path has an entrance at the upstream side 86 of the plate and an exit at the downstream side 88 thereof. The entrance of a first one of the paths passing through each passage 82 is radially outwardly of the entrance of the second one of the paths passing therethrough and the exit of the first path is radially inwardly of the exit of the other path. Thus the first paths through the passages 82 function (like through passages 52 in the first embodiment) to direct plastics material adjacent the barrel 14 on the upstream side 86 of the plate 80 radially inwardly and the second paths through the passages 82 function (like the passages 64 in the first embodiment) to direct plastics material which is radially inwardly of the plastics material adjacent the barrel on the upstream side 86 of the plate 80 radially outwardly so that the material radially inwardly of the material adjacent the barrel upstream of the plate 80 forms the outer surface layer of the covering 32.

As shown in Figure 6 each flight 94 and 96 of the double flight insert extends through 180° between the upstream and downstream sides of the plate 80 when the insert is fitted in a passage 82. This results in the above-mentioned relative radial positions of the entrances and exits of the paths.

In the illustrated embodiment the spacing of the flights 94 and 96 is such that each of the two paths defined by the insert and passage has the same cross-sectional area and thus flows of equal flow rate pass along the two paths. However, the spacing of the flights may be such that one of the paths has a larger cross-sectional area than the other and therefore has a flow of larger flow rate passing along it. Advantageously, the path having the radially outer of the exits, that is the second path mentioned above provided for directing plastics material radially inwardly of the material adjacent the barrel upstream of the plate radially outwardly for forming the outer surface layer of the covering, is the path having the larger cross-sectional area. It will be understood that such an arrangement further reduces the time taken during a colour change to reach a condition in which the colour of the outer surface of the covering is the new colour in view of the increased flow of new colour to the outer surface layer of the covering.

Similarly, although the passages 82 extending through the plate 80 may be substantially parallel to each other and the axis 98 thereof it is preferred to arrange for the upstream ends 92 of the passages to be radially inwardly of the downstream ends thereof since this arrangement also reduces the time taken to reach a condition in which the colour of the outer surface of the covering is the new colour.

The plate 80 is also provided with further through passages 100 radially inwardly of the passages 82 and extending substantially parallel to each other and the axis 98. Thus, as with the passages 70 in breaker plate 50, material passing through passages 100 proceeds with substantially no radial deviation.

It is to be understood that although only one circumferential array of parallel passages 100 is shown, further such arrays radially inwardly of the passages 82 may be provided.

In order to demonstrate the reduction in time taken for a colour change achieved by the first embodiment of the invention, colour changes were carried out using a conventional breaker plate - ie a breaker plate with parallel through passages - and a breaker plate 50 as shown in Figures 2 and 3. It was found that with the breaker plate 50 the surface of the covering was the new colour after 15 minutes and that after 20 minutes with the conventional breaker plate the colour of the surface of the covering was still predominantly the old colour.

On completion of the colour change with the breaker plate 50 after 15 minutes the extruder was stripped down and it was found that the material adjacent the barrel upstream of the breaker plate was still of the old colour. Further examination of the covering showed that whilst the colour of the surface of the covering was the new colour, material of the old colour was present in the covering inwardly of the surface in eight discrete flow paths corresponding to the eight passages 54.

In the two embodiments described above improved colour change times are achieved by the provision of the modified breaker plate 50 or 80 at the conventional location for the breaker plate in an extruder having a cross-head, that is at a position immediately downstream of the screw 12 whereby the plastics material exiting the through passages of the breaker plate is subsequently diverted in the cross-head substantially 90° before passing through the die 22.

Even better improvements are possible if a device similar to plate 50 or 80 is positioned within the cross-head or downstream thereof and upstream of the die 22 so that it acts on the plastics material after the plastics material has been diverted substantially 90° in the cross-head.

As will be appreciated in this case plastics material which is radially inwardly of an outer layer of plastics material upstream of the device (which outer layer would otherwise provide the surface layer of the covering 32) is directed radially outwardly on passage through the device so that it forms the outer layer of the covering 32. Also the outer layer of plastics material upstream of the device is directed radially inwardly on passage through the device. Suitable locations for the device are shown by the chain dotted lines 110 and 112 respectively in Figure 1. As will be appreciated if provided at location 110 the device will comprise an annulus having through passages 52 and 64 in the case of a device based on modified beaker plate 50 or through passages 82 with inserts 90 in the case of a device based on modified breaker plate 80. It will also be understood that the extruder would be provided with a conventional breaker plate 18.

## Claims

1. A method of extruding an elongate plastics member with an extruder provided with an extrusion die, in which method upstream of the die, plastics material which is radially inwardly of an outer layer of plastics material which would otherwise provide the surface layer of the extruded member is directed radially outwardly so that it forms the surface layer of the extruded member and/or plastics material from the outer layer is directed radially inwardly.

2. A method of extruding an elongate plastics member with an extruder comprising a rotatable screw within a barrel in which method an outer surface layer of the elongate member is formed from plastics material which was radially inwardly of plastics material adjacent the barrel.

3. An extruder for extruding an elongate plastics member provided with extrusion die means comprising an extrusion die and upstream of said die a device which is adapted to cause (i) plastics material which is radially inwardly of an outer layer of plastics material which would otherwise provide the surface layer of the extruded member to be radially outwardly directed to form the surface layer of the extruded member and/or (ii) plastics material from the outer layer to be radially inwardly directed.

4. An extruder for extruding an elongate plastics member, comprising a rotatable screw within a barrel for extruding plastics material through an extrusion head of the extruder provided with extrusion die means, wherein a device positioned upstream of the die means is adapted to cause plastics material which is radially inwardly of plastics material adjacent the barrel upstream of the device to be radially outwardly thereof downstream of the device such that an outer surface layer of the elongate plastics member extruded by the extruder comprises the material which was radially inwardly of the material adjacent the barrel upstream of the device.

5. An extruder as claimed in claim 3 or 4, wherein said device comprises a breaker plate having through passages for the passage of plastics material therethrough.

6. An extruder as claimed in claim 5, wherein said through passages comprise at least one circumferentially spaced apart array of first through passages having inlets at the upstream side of the breaker plate which are radially outwardly of outlets thereto at the downstream side of the breaker plate and at least one circumferentially spaced apart array of second through passages having inlets at the upstream side of the breaker plate which are radially inwardly of the inlets of said first through passages and outlets at the downstream side of the breaker plate which are radially outwardly of the outlets of said first through passages.

7. An extruder as claimed in claim 5, wherein said through passages comprise a circumferentially spaced apart array of through passages extending through said breaker plate, each through passage having a double flight screw non-rotatably fixed therein to define two paths for plastics material passing through the through passage from the upstream side of the plate to the downstream side of the plate, each path having an entrance at the upstream side of the plate and an exit at the downstream side thereof, the entrance of one of said paths being radially outwardly of the entrance of the other path and the exit of said one path being radially inwardly of the exit of said other path.

8. An extruder as claimed in claim 7, wherein each flight of said double flight screw extends through substantially 180° between the upstream and downstream sides of the plate.

9. An extruder as claimed in claim 6, 7 or 8, wherein the spacing of the flights of said double flight screw is such that one of said paths has a larger cross-sectional area than the other of said paths.

10. An extruder as claimed in claim 9, wherein said one path is the path having the radially outer of the exits of said paths.

11. An extruder as claimed in any one of claims 7 to 10, wherein said double flight screw is removably mounted in said through passage.

12. An extruder as claimed in claim 11, wherein said screw is insertable in said through passage from the upstream end thereof and locates against abutment means for preventing movement downstream thereof.

13. An extruder as claimed in any one of claims 7 to 12, wherein said through passages are substantially parallel.

14. An extruder as claimed in any one of claims 7 to 12, wherein the upstream ends of the passages are radially inwardly of the downstream ends thereof.

15. An extruder as claimed in any one of claims 5 to 14, wherein said through passages include substantially parallel through passages radially inwardly of the previously recited through passages.

16. An extruder as claimed in any one of claims 3 to 15, wherein the extrusion die means is configured for extruding a tubular elongate member.

17. A breaker plate for an extruder as claimed in claim 3 or 4 and as defined in any one of claims 5 to 16.
